# EUROPÄISCHE PATENTANMELDUNG

(11) **EP 4 105 150 A1**
(43) Veröffentlichungstag der Anmeldung: **21.12.2022**
(21) Anmeldenummer: 22175412.0
(22) Anmeldetag: 25.05.2022
(51) Int. Cl.: B65G 17/08, B65G 17/40

(54) **SCHARNIERBAND MIT DOPPELPLATINE**

(30) Priorität: 16.06.2021 DE 102021115517
(71) Anmelder: Kabelschlepp GmbH - Hünsborn, 57482 Wenden-Hünsborn (DE)
(72) Erfinder: Diebel, Michael, 35687 Dillenburg (DE)
(74) Vertreter: Neumann, Ditmar

(57) **Zusammenfassung**

Scharnierbandförderer mit einem endlosen Scharnierband und einer mit dem Scharnierband verbundenen Betätigungseinrichtung, wobei das Scharnierband durch gelenkig miteinander verbundene Glieder (13) gebildet ist. Es wird vorgeschlagen, dass jedes Glied (13) durch zwei parallel zueinander beabstandet angeordnete Platten (14.1, 14.2) gebildet ist, wobei jede Platte (14.1, 14.2) versetzt zueinander angeordnet Scharnieraugen (15.1, 15.2) aufweist. Jeweils zwei benachbarte Glieder (13) sind durch einen sich durch die Scharnieraugen (15.1, 15.2) der Platten (14.1, 14.2) erstreckenden Bolzen verbunden.

## Beschreibung

Der Gegenstand der Erfindung bezieht sich auf einen Scharnierbandförderer mit einem endlosen Scharnierband und mit einer mit dem Scharnierband verbundenen Betätigungseinrichtung, wobei das Scharnierband durch gelenkig miteinander verbundene Glieder gebildet ist.

Scharnierbandförderer werden überwiegend in Verbindung mit Werkzeugmaschinen verwendet. Hierbei können Scharnierbandförderer als Einzelförderer an Werkzeugmaschinen oder als verkettete Fördersysteme eingesetzt werden.

Ein Scharnierbandförderer kann zur Entsorgung der an der Werkzeugmaschine entstandenen Späne, Butzen oder Nippel dienen. In einem solchen Fall ist ein Scharnierbandförderer Teil eines Späneentsorgungs- und Rohstoffrückgewinnungssystems.

Es ist bekannt, dass während der Bearbeitung eines Werkstücks mit einer Werkzeugmaschine Kühl- und Schmiermittel in flüssiger Form verwendet werden. Während des Fördervorgangs gelangen somit nicht nur Späne oder allgemein gesprochen Rohstoffreste auf das Scharnierband, sondern auch die während der Bearbeitung anfallenden Flüssigkeiten. Um bereits während des Fördervorgangs eine Trennung zwischen fest und flüssig wenigstens teilweise zu erreichen, ist es bekannt, dass das Scharnierband perforierte Glieder aufweist, so dass die Flüssigkeit von den Spänen abgetrennt werden kann.

Scharnierbandförderer werden auch dazu verwendet, um insbesondere Halbfabrikate bspw. in Form von Blechteilen, den Werkzeugbearbeitungsmaschinen zuzuführen. Ein Scharnierbandförderer kann auch zum Abtransport der durch die Werkzeugmaschine bearbeiteten Teile oder Zuschnitte verwendet werden. Dies ist bspw. bei Laserschneidmaschinen der Fall. Bei derartigen Laserschneidmaschinen besteht aufgrund der hohen Verarbeitungsgeschwindigkeit das Problem, dass die die Laserschneidmaschine verlassenden Teile teilweise eine sehr hohe Temperatur aufweisen, wenn die Teile an den Scharnierbandförderer abgegeben werden. Dies kann zu Einbränden in den Gliedern des Scharnierbands führen. Durch unsachgemäße Bedienung, bspw. einer Laserschneidanlage, besteht auch das Problem, dass das Scharnierband durch den Laserstrahl getroffen und somit beschädigt werden kann.

In den meisten Fällen besteht das Scharnierband aus gelenkig miteinander verbundenen Gliedern. Die Glieder sind aus einem metallischen Werkstoff hergestellt. Hierbei können die Glieder aus Stahlblech bestehen. Ein Scharnierbandförderer kann eine erhebliche Breite aufweisen. So ist bspw. bekannt, dass die Glieder eine Länge, das heißt eine Streckung quer zur Förderrichtung von mehr als 2000 mm haben können.

Bedingt durch die Geometrie der Glieder haben diese eine relativ geringe Steifigkeit hinsichtlich Torsion und Biegung. Dieses Problem wird noch weiter verstärkt, wenn die Glieder eine Perforation aufweist, um die in der Werkzeugmaschine verwendete Bearbeitungsfluida während des Abtransports abzutrennen. Dieses Problem ist bereits bekannt. Zur Lösung des Problems werden zusätzliche Strukturen bspw. in Form von Profilen an wenigstens einigen Gliedern vorgesehen. Diese zusätzlichen Strukturen können mit den Gliedern bspw. verschweißt sein. Wird bspw. ein Profil auf die Oberseite eines Glieds aufgeschweißt, so erhöht sich der Raumbedarf des Scharnierbandförderers. Es besteht auch die Gefahr, dass es zu Kollisionen zwischen der Verstärkung und einem Werkzeug einer Werkzeugmaschine kommen kann.

Dies vorangestellt liegt der vorliegenden Erfindung die Aufgabe zugrunde, einen Scharnierbandförderer mit einem endlosen Scharnierband anzugeben, der konstruktiv einfach aufgebaut ist und dessen Scharnierband eine höhere Steifigkeit aufweist.

Diese Aufgabe wird mit einem Scharnierbandförderer und mit einem Glied gemäß den Merkmalen der unabhängigen Patentansprüche gelöst. Weitere vorteilhafte Ausgestaltungen sind in den jeweils abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sach-verhalte aus der Beschreibung ergänzt werden, wobei weitere Ausführungsvarianten der Erfindung aufgezeigt werden.

Der erfindungsgemäße Scharnierbandförderer weist ein endlos umlaufendes Scharnierband auf. Das Scharnierband wird mittels einer Betätigungseinrichtung bewegt. Das Scharnierband ist durch gelenkig miteinander verbundene Glieder gebildet. Jedes Glied des Scharnierbands ist durch zwei parallel zueinander beabstandet angeordnete Platten gebildet. Jede Platte weist versetzt zueinander angeordnete Scharnieraugen auf. Jeweils zwei benachbarte Glieder sind durch einen sich durch die Scharnieraugen der Platten erstreckenden Bolzen miteinander verbunden.

Dadurch, dass das Glied durch zwei parallel zueinander beabstandet angeordnete Platten gebildet ist, wird eine hohe Steifigkeit des Glieds und somit auch des Scharnierbands erreicht.

Durch eine entsprechende Anordnung der Scharnieraugen an einer Platte kann durch die Verwendung zweier im wesentlichen gleicher Platten ein Glied aufgebaut werden. Dies führt zu einer erheblichen Reduktion der Herstellungsaufwandes eines Scharnierbandförderers. Des Weiteren kann der Aufwand, der zur Herstellung eines Gliedes notwendig ist, reduziert werden. Durch Variation der Anzahl der Scharnieraugen an der Platte kann die Steifigkeit der Platte und eines aus den Platten aufgebauten Gliedes positiv beeinflusst werden.

So kann bspw. die die Oberfläche des Bands bildende Platte perforiert sein, während die untere Platte des Glieds keine Perforation aufweist. Durch die Perforation kann eine Trennung zwischen fest und flüssig erfolgen, so dass bspw. Kühlflüssigkeit durch die obere Platte hindurchtreten kann und die Flüssigkeit dann durch die untere Platte abgeleitet wird. Die Torsionsfestigkeit ist dabei hinreichend groß, um Verbiegungen des Gliedes zu vermeiden. Des Weiteren wird durch die Konstruktion erreicht, dass zusätzliche Verstärkungen oder Versteifungen eines Glieds nicht mehr zwingend erforderlich sind. Es besteht auch die Möglichkeit, dass beide Platten eine Perforation aufweisen.

Nach einer Weiterbildung des Scharnierbandförderers wird vorgeschlagen, dass die Schwenkachse benachbarter Platten im Wesentlichen mittig zwischen einer Oberseite und einer Unterseite des Glieds liegt, wodurch eine im wesentlichen symmetrische Ausgestaltung des Gliedes erreicht werden kann.

Die Glieder sind vorzugsweise so ausgebildet, dass sie jeweils eine plane Oberseite und eine plane Unterseite aufweisen. Hierdurch wird ein Scharnierband bereitgestellt, welches im Wesentlichen plan ist.

Zur Vereinfachung der Herstellung eines Glieds wird vorgeschlagen, dass die Platten aus einem Blechteil hergestellt sind. Die Scharnieraugen können hierbei durch Umbiegen entsprechender Laschen aus dem Blechteil hergestellt werden. Zur Verbesserung der Haltbarkeit und Festigkeit der einzelnen Glieder wird vorgeschlagen, dass die freien Endbereiche der umgebogenen Laschen an der Platte fixiert sind. Die Fixierung kann hierbei dadurch erfolgen, dass der freie Endbereich zumindest stellen weise angeschweißt wird.

Alternativ können die Scharnieraugen durch rohrförmige Abschnitte gebildet sein, welche mit der Platte verbunden sind. Sind die Scharnieraugen und die Platte bspw. aus einem Stahl hergestellt, können diese miteinander verschweißt werden.

Durch die Anordnung und die Anzahl der Scharnieraugen kann die Steifigkeit der Glieder weiter verbessert und die Feingliederigkeit des Scharnierbands erhöht werden.

Nach einem weiteren erfinderischen Gedanken wird ein Glied eines Scharnierbandförderers vorgeschlagen, wobei das Glied durch zwei parallel zueinander beabstandet angeordnete Platten gebildet ist, wobei jede Platte versetzt zueinander angeordnet Scharnieraugen aufweist.

Weitere Vorteile und Einzelheiten der Erfindung werden anhand des in der Zeichnung dargestellten Ausführungsbeispiels erläutert, ohne dass der Gegenstand der Erfindung auf das konkrete Ausführungsbeispiel beschränkt wird.

Es zeigen:
- Fig. 1:: schematisch in einer Seitenansicht einen Scharnierbandförderer,
- Fig. 2:: Glieder eines Scharnierbandförderers,
- Fig. 3:: ein Glied eines Scharnierbands und
- Fig. 4:: eine Ausführungsform einer Platte eines Glieds nach Fig. 3.

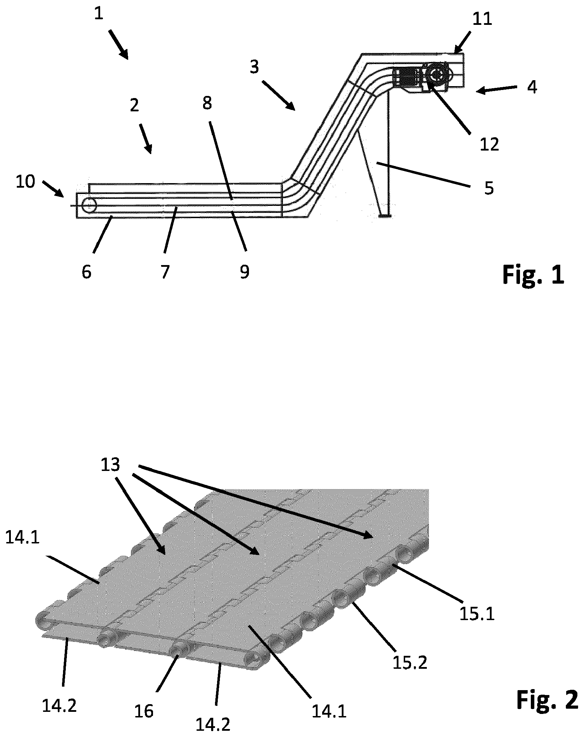

In der Fig. 1 ist schematisch und in einer Seitenansicht ein Scharnierbandförderer 1 dargestellt. In dem dargestellten Ausführungsbeispiel weist der Scharnierbandförderer 1 einen Aufgabebereich 2 auf. Der Aufgabebereich 2 geht in einen Steigungsbereich 3 über. Der Steigungswinkel ist mit dem Bezugszeichen α versehen. Der Steigungsbereich 3 geht in einen im Wesentlichen horizontal verlaufenden Abwurfbereich 4 über. Der Steigungsbereich 3 sowie der Abwurfbereich 4 werden durch ein Gestell 5 gehalten.

Innerhalb eines Gehäuses 6 ist ein Scharnierband 7 angeordnet, welches in dem dargestellten Ausführungsbeispiel gestrichelt dargestellt ist. Das Scharnierband 7 weist einen Obertrum 8 und einen Untertrum 9 auf. Mit dem Bezugszeichen 10 ist ein Umlenkbereich im Aufgabebereich 2 bezeichnet. Ein entsprechender Umlenkbereich 11 ist im Abwurfbereich 4 vorgesehen.

Im Umlenkbereich 11 ist eine Betätigungseinrichtung 12 vorgesehen. Bei der Betätigungseinrichtung 12 umfasst einen Elektromotor, der mittelbar oder unmittelbar mit einer nicht dargestellten Betätigungswelle verbunden ist.

Die dargestellte Bauform des Scharnierbandförderers 1 ist beispielhaft. So kann der Scharnierbandförderer eine gerade Bauform oder eine gerade und steigende Bauform haben.

In den Aufgabebereich 2 gelangen nicht dargestellte Teile, bei denen es sich um Späne etc. als Rohstoffreste handelt, die auf das Scharnierband 7. Diese Rohstoffreste werden zu dem Abwurfbereich 4 gefördert, von wo aus sie bspw. in einen nicht dargestellten Rohstoffcontainer abgeworfen werden.

Das Scharnierband 7 ist durch gelenkig miteinander verbundene Glieder 13 gebildet. Einen Abschnitt der Glieder 13 des Scharnierbands 7 ist in der Fig. 2 dargestellt. Aus der Fig. 2 ist ersichtlich, dass jedes Glied 13 durch zwei parallel zueinander beabstandet angeordnete Platten 14.1, 14.2 gebildet ist. Jede Platte 14.1, 14.2 weist versetzt zueinander angeordnete Scharnieraugen 15.1, 15.2 auf. Die Scharnieraugen 15.1, 15.2 bilden eine Aufnahme 16 für einen nicht dargestellten Bolzen. Zwei benachbarte Glieder 13 sind relativ zueinander um den Bolzen verschwenkbar. Die Bolzen weisen Endebereiche auf, die mit bspw. einer nicht dargestellten Hohlbolzenkette verbunden sind. Die Betätigungseinrichtung 12 weist ein an der Welle angeordnetes entsprechendes Kettenrad auf, welches in die Zwischenräume der Hohlbolzenkette eingreift, so dass eine Bewegung des Scharnierbands 7 erreicht wird. In dem Umlenkbereich 11, der sich im Aufgabebereich 2 befindet, ist eine Achse vorgesehen, die gleichfalls Kettenräder aufweist, über die die Hohlbolzenketten, die beidseits des Scharnierbands 7 laufen, in Verbindung stehen.

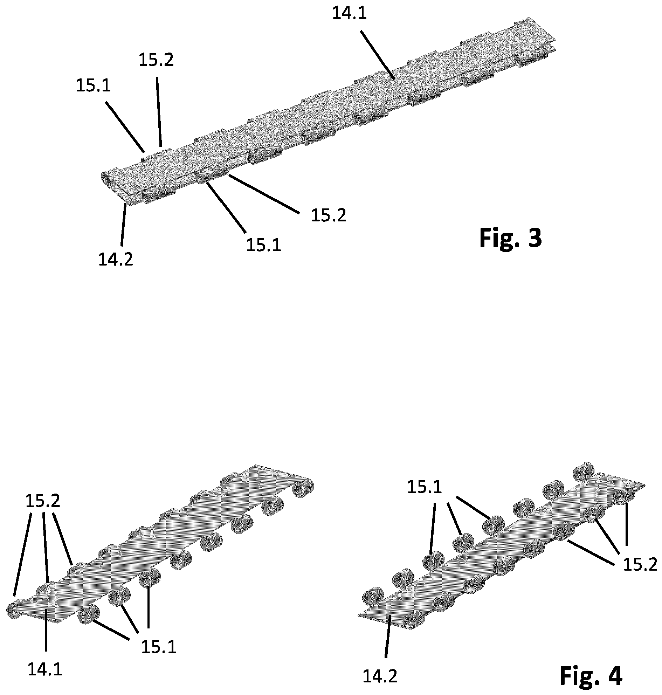

Das in der Fig. 3 dargestellte Glied 13 ist gebildet durch zwei beabstandet angeordnete Platten 14.1, 14.2. Jede Platte 14.1, 14.2 weist beabstandet zueinander ausgebildete Scharnieraugen 15.1, 15.2 auf. Die Platten 14.1, 14.2 sind aus einem Stahlblech hergestellt. Zur Herstellung der Platten 14.1, 14.2 und der Scharnieraugen 15.1, 15.2 wird das Halbfabrikat so hergestellt, dass eine Platte 14.1, 14.2 mit Laschen bereitgestellt wird. Diese Laschen werden anschließend gerollt, so dass an Scharnieraugen 15.1, 15.2 entstehen. Aus dem dargestellten Ausführungsbeispiel ist ersichtlich, dass die Scharnieraugen 15.1, 15.2 so ausgebildet sind, dass bei dem zusammengesetzten Glied 13 eine im Wesentlichen ebene Oberseite und eine im Wesentlichen ebene Unterseite entstehen. Die Scharnieraugen 15.1, 15.2 können durch Schweißen mit der betreffenden Platte 14.1, 14.2 verbunden werden, so dass eine höhere Steifigkeit erreicht wird.

Zur Herstellung eines Glieds 13 ist es ausreichend, wenn eine Platte14.1, 14.2, wie sie bspw. in der Fig. 4 dargestellt ist, hergestellt wird. Durch entsprechende Ablängung der Platte 14.1, 14.2 kann diese so gedreht mit einer anderen Platte 14.1, 14.2 montiert werden, dass die Scharnieraugen 15.1, 15.2 an der oberen und der unteren Platte vorzugsweise aneinanderstoßen, wie dies in der Fig. 3 dargestellt ist.

Das in der Fig. 3 dargestellte Glied 13 kann auf der Oberseite und auf der Unterseite Perforationen aufweisen, so dass während des Transports vom Aufgabebereich zum Abwurfbereich eine Fest-Flüssig-Trennung erfolgen kann.

Die Länge der Glieder kann bis deutlich über 2000 mm betragen, wobei die Länge dahingehend zu verstehen ist, dass es sich hierbei um eine Erstreckung quer zur Transportrichtung T handelt.

Ein solch hergestelltes Glied weist eine hohe Festigkeit auf. Ein aus den Gliedern aufgebautes Scharnierband bedarf keiner zusätzlichen Versteifungen. Auf der Oberseite der Glieder können ggf. Mitnehmer vorgesehen sein, um sicherzustellen, dass während des Transports vom Aufgabebereich zum Abwurfbereich die sich auf dem Scharnierband befindenden Teile im Steigungsbereich nicht nach unten gleiten oder rutschen.

Durch die Variation der Anzahl der Scharnieraugen kann die Steifigkeit eines Glieds noch weiter verbessert werden.

Das Scharnierband ist durch gelenkig miteinander verbundene Glieder gebildet. Jedes Glied des Scharnierbands ist durch zwei parallel zueinander beabstandet angeordnete Platten gebildet. Jede Platte weist versetzt zueinander angeordnete Scharnieraugen auf. Jeweils zwei benachbarte Glieder sind durch einen sich durch die Scharnieraugen der Platten erstreckenden Bolzen miteinander verbunden. Dadurch, dass das Glied durch zwei parallel zueinander beabstandet angeordnete Platten gebildet ist, wird eine hohe Steifigkeit des Glieds und somit auch des Scharnierbands erreicht. Ein solche Scharnierband kann eine verschiebbare tragfähige Schutzabdeckung, z.B. auch eine Grubenabdeckung bilden. Bei einer Grube kann es sich beispielsweise um eine Inspektions-und/oder Montagegrube handeln, wie sie z.B. aus dem Bereich der Kraftfahrzeuge bekannt ist. Im Zusammenhang mit Förderern kann anhand solcher Abdeckungen der Aufgabebereich, angepasst and die jeweilige Bearbeitung, verkleinert, begehbar und sicher abgedeckt werden. Das Scharnierband kann dafür direkt auf dem Förderkorpus oder auch an einer höher verlaufenden Maschinen oder Fundament-Kante geführt werden. Für solche Anwendungsfälle ist es vorteilhaft die begehbare Platte mit Noppen-Prägungen rutschhemmend auszugestalten. Es ist nicht zwingend, dass die Grubenabdeckung die Grube vollständig abdeckt. Es kann ausreichend sein einen Teil der Längserstreckung der Grube abzudecken. Hierzu ist das Scharnierband mit einer Verschiebeeinrichtung verbunden, durch welche die Grubenabdeckung in Längsrichtung der Grube verschoben werden kann.

Es besteht auch die Möglichkeit, dass die Grubenabdeckung mit einer Einrichtung verbunden ist, durch welche die Grubenabdeckung aufge- und/oder abgerollt werden kann. Die Ausgestaltung der Grubenabdeckung entspricht der vorstehend beschriebenen und dargestellten Ausführungsform des Scharnierbandes.

### Bezugszeichenliste

- 1: Scharnierbandförderer
- 2: Aufgabebereich
- 3: Steigungsbereich
- 4: Abwurfbereich
- 5: Gestell
- 7: Scharnierband
- 8: Obertrum
- 9: Untertrum
- 10: Umlenkbereich
- 11: Umlenkbereich
- 12: Betätigungseinrichtung
- 13: Glieder
- 14.1, 14.2: Platte
- 15.1, 15.2: Scharnieraugen
- 16: Aufnahme

## Patentansprüche

1. Scharnierbandförderer mit einem endlosen Scharnierband (7) und einer mit dem Scharnierband (7) verbundenen Betätigungseinrichtung (12), wobei das Scharnierband (7) durch gelenkig miteinander verbundene Glieder (13) gebildet ist,
**dadurch gekennzeichnet, dass**
jedes Glied (13) durch zwei parallel zueinander beabstandet angeordnete Platten (14.1, 14.2) gebildet ist, wobei jede Platte (14.1, 14.2) versetzt zueinander angeordnet Scharnieraugen (15.1, 15.2) aufweist, und dass jeweils zwei benachbarte Glieder (13) durch einen sich durch die Scharnieraugen (15.1, 15.2) der Platten (14.1, 14.2) erstreckenden Bolzen verbunden sind.

2. Scharnierbandförderer nach Anspruch 1, wobei die Schwenkachse im Wesentlichen mittig zwischen einer Oberseite und einer Unterseite des Gliedes (13) liegt.

3. Scharnierbandförderer nach Anspruch 1 oder 2, wobei die Glieder (13) jeweils eine plane Oberseite und eine plane Unterseite aufweisen.

4. Scharnierbandförderer nach Anspruch 1, 2 oder 3, wobei die Platten (14.1, 14.2) aus einem Blechteil hergestellt sind.

5. Scharnierbandförderer nach Anspruch 4, wobei die Scharnieraugen (15.1, 15.2) der Platten (14.1, 14.2) durch umbiegen hergestellt sind.

6. Scharnierbandförderer nach Anspruch 5, wobei der freie Endbereich des umgebogenen Scharnieraugen (15.1, 15.2) an der Platte fixiert ist.

7. Scharnierbandförderer nach einem der Ansprüche 1 bis 4, wobei die Scharnieraugen (15.1, 15.2) durch rohrförmige Abschnitte gebildet sind, welche mit der Platte (14.1, 14.2) verbunden sind.

8. Glied eines Scharnierbandförderers, wobei das Glied (13) durch zwei parallel zueinander beabstandet angeordnete Platten (14.1, 14.2) gebildet ist, wobei jede Platte (14.1, 14.2) versetzt zueinander angeordnet Scharnieraugen (15.1, 15.2) aufweist.

9. Glied eines Scharnierbandförderers nach Anspruch 8, wobei dieses nach einem der Ansprüche 2 bis 7 ausgebildet ist
